# EUROPEAN PATENT APPLICATION

(11) **EP 2 275 650 A1**
(43) Date of publication of application: **19.01.2011**
(21) Application number: 09173330.3
(22) Date of filing: 16.10.2009
(51) Int. Cl.: F01K 23/10, F01K 23/16, F22D 1/18, F22D 1/38

(54) **Combined cycle power plant**

(30) Priority: 17.10.2008 US 253435
(71) Applicant: General Electric Company, Schenectady, NY 12345 (US)
(72) Inventor: Zhang, Hua, Greer, SC 29650 (US); Ranasinghe, Jatila, Simpsonville, SC 29681 (US)
(74) Representative: Gray, Thomas

(57) **Abstract**

A combined cycle power plant (10) including a gas turbine (12), a steam turbine (18) and a heat recovery generator (24), for thermally connecting the gas turbine (12) and the steam turbine (18). The heat recovery steam generator (24) has a duct (28) for receiving hot exhaust gas (32) from the gas turbine (12). The heat recovery steam generator (24) is also associated with a heating system (34) for receiving feed water (36) for heating to steam. A heat pipe (30) having a first end (29) disposed within the duct (28) operates to remove heat there from. A second end (31) of the heat pipe (30) disposed within the heating system (34) operates to transfer heat to the feed water (36).

## Description

### BACKGROUND OF THE INVENTION

The subject matter disclosed herein relates to a combined cycle power plant and, more particularly, to a heat recovery system for improved output and efficiency.

A combined cycle power plant utilizes a gas turbine and a steam turbine, in combination, to produce electricity. The power plant is arranged such that the gas turbine is thermally connected to the steam turbine through a heat recovery system such as a heat recovery steam generator ("HRSG"). The HRSG is a heat exchanger that allows feed water for the steam generation process to be heated by hot gas turbine exhaust gas. The HRSG is essentially a large duct with water filled tube bundles disposed therein. Feed water is circulated through the tube bundles such that the water is heated to steam as the exhaust gas passes through the duct and over the tube bundles. A primary efficiency of the combined cycle arrangement is the utilization of the otherwise "wasted" gas turbine exhaust gas heat. The efficiency of the HRSG is directly related to the efficiency of heat transfer between the hot turbine exhaust gas (hot side) and the feed water and steam in the tube bundles (cold side). It is known to utilize flow fins to assist in the rate of heat transfer from the hot turbine exhaust gas to the feed water in the tube bundles, however overall heat transfer is limited by the cold-side surface area, and the condition of that surface area, within the tubes.

It is therefore desired to provide a combined cycle power plant having increased efficiency through the improvement of heat transfer in the HRSG.

### BRIEF DESCRIPTION OF THE INVENTION

In one embodiment of the invention a combined cycle power plant includes a heat recovery system for recovering heat from a hot exhaust flow. The heat recovery system includes heat pipes interposed therein. The heat pipes transfer heat from within the heat recovery system to a heating system associated therewith, in which feed water is circulated about the exterior of the heat pipes such that the water is heated to steam.

### BRIEF DESCRIPTION OF THE DRAWINGS

The invention, in accordance with preferred and exemplary embodiments, together with further objects and advantages thereof, is more particularly described in the following detailed description taken in conjunction with the accompanying drawings in which:
FIG. 1 is a schematic view of a combined cycle power plant embodying the invention; and
FIG. 2 is a schematic view of the heating system of the combined cycle power plant of FIG. 1.

### DETAILED DESCRIPTION OF THE INVENTION

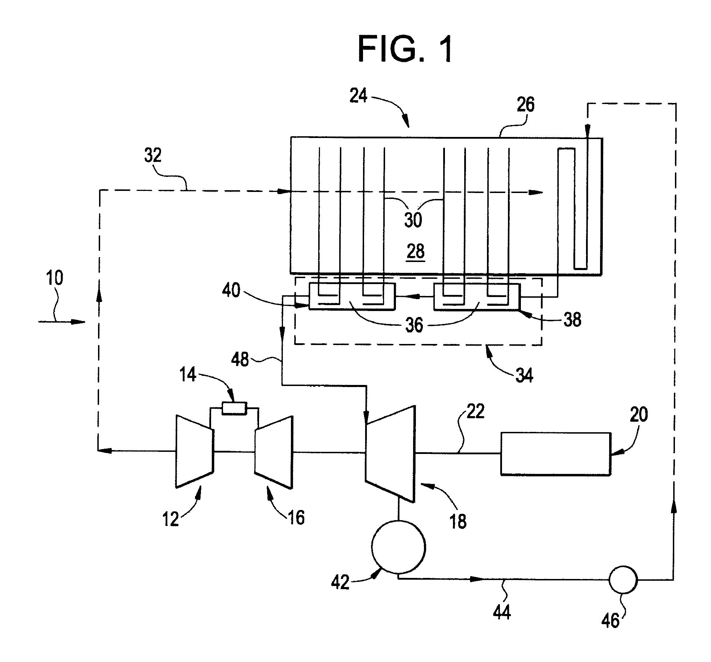

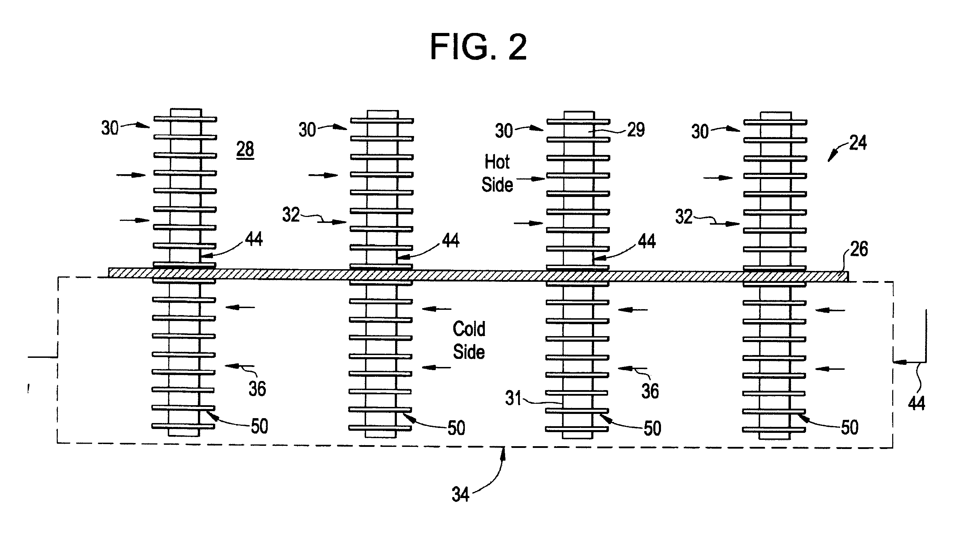

Referring now to the drawings, in which like numerals indicate like elements throughout the views, FIGS. 1 and 2 show a combined cycle power plant 10. The power plant 10 includes a gas turbine system 12 with a combustion system 14 and a turbine 16. The power plant 10 further includes a steam turbine system 18. The steam turbine system 18 drives a generator 20 that produces electrical power. The gas turbine system 12, the steam turbine system 18 and the generator 20 may be arranged on a single shaft 22. Other configurations, such as multiple shafts, may be used.

The gas turbine system 12 and the steam turbine system 18 are associated with a heat recovery steam generator ("HRSG") 24. The HRSG 24 is a heat exchanger having an exhaust flow duct 28 defined by walls 26. A heating system 34 is associated with the HRSG and is the mechanism through which feed water 36 flows for heating to steam as described in further detail below. A series of heat pipes 30 have first ends 29 that are partially disposed within the HRSG exhaust flow duct 28 and second ends 31 which extend into the reheat system 34. As high temperature exhaust gas 32, from the turbine 16, passes through the HRSG, the heat pipes 30 transfer heat from the high temperature exhaust gas 32 to the heating system 34, resulting in the transfer of heat from the high temperature exhaust gas to feed water 36, flowing therethrough. The feed water 36 flows, with the aide of feed water pump 46, from the condenser 42. where it is collected from the steam turbine system 18, to the HRSG 24 via conduit 44. The feed water passes through the heating system 34 where it is heated to steam using heat from high temperature exhaust gas 32, and is subsequently delivered to the steam turbine system 18 via return conduit 48.

The heat pipes 30 may be of a convective or a conductive, solid-state construction. Conductive, solid-state heat pipes comprise a vacuum tight carrier such as a tube or conduit containing a solid or semisolid superconducting heat transfer medium placed within the cavity of the conduit. The medium is applied to the conduit walls in layers resulting in highly efficient conduction of heat. A convective heat pipe includes a vacuum tight tube or conduit in which is disposed a wick structure and a working fluid. The convective heat pipe operates by transferring heat through mass transfer of the working fluid and the phase change of the carrier from a liquid state to a vapor state within the tube.

In an exemplary embodiment of the present invention shown schematicaly in FIG.2, the heat pipes 30 extend out of exhaust flow duct 28, through the wall 26 of HRSG 24 where they communicate with the heating system 34 to transfer heat to the feed water 36. The heating system 34 is configured to extract the desired quantity of heat from the heat pipes 30, and thus the HRSG 24. Unlike known systems, the heat transfer to the feed water occurs outside of the high temperature exhaust gas flow 32 in the exhaust flow duct 28 and is not affected by the heat transfer limitations of wet heat transfer systems in which the cold side surface area is limited by the surface area within the conventional feed water pipes. In the present invention, the cold side surface area 50 is defined by the exterior of the second ends 31 of the heat pipes 30. As such, the surface area 50 that is available for heat transfer to the feed water 36 is not limited and may be sized for increased heat transfer.

While the heat pipes 30, shown in FIG. 2, are generally cylindrical in shape, the present invention contemplates conduits in a variety of shapes and sizes, including flat plates. It is contemplated that the configuration of the heat pipes 30 will be selected to efficiently transfer heat to and from the tube while lowering or maintaining an acceptable exhaust flow backpressure within the exhaust flow duct 28 of HRSG 24.

The written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A combined cycle power plant (10) including a gas turbine (12) and a steam turbine (18), comprising:
a heat recovery system (24), for thermally connecting the gas turbine (12) and the steam turbine (18), having a duct (28) for receiving hot exhaust gas (32) from the gas turbine (12);
a heating system (34) associated with the heat recovery system (24) for receiving feed water (36);
at least one heat pipe (30) having a first end (29) disposed within the duct (28) in contact with, and operable to remove heat from the hot exhaust gas (32) and a second end (31) disposed within the heating system (34) and operable to transfer the heat to the feed water (36).

2. A combined cycle power plant (10) according to claim 1, wherein heat transfer from the at least one heat pipe (30) to the feed water (36) occurs outside of the hot exhaust gas (32).

3. A combined cycle power plant (10) according to claim 1 or 2, the second end (31) of the at least one heat pipe (30) defining a cold side heat transfer surface (50).

4. A combined cycle power plant (10) according to any of the preceding claims, the at least one heat pipe (30) further comprising;
a conduit (44);
at least one of a solid or semisolid heat transfer medium disposed inside the conduit (44) on the walls thereof and operable to transfer heat from the first end (29) to the second end (31) thereof.

5. A combined cycle power plant (10) according to any of the preceding claims, the at least one heat pipe (30) further comprising;
a conduit (44);
a working fluid disposed within the conduit (44);
the working fluid operable to transfer heat from the first end (29) to the second end (31) thereof.

6. A combined cycle power plant heat recovery system (24) for recovering heat from a hot exhaust flow (32) comprising:
a duct (28) for receiving hot exhaust gas (32);
a heating system (34) for receiving feed water (36);
a heat pipe (30) having a first end (29) disposed within the duct (28) and a second end (31) disposed within the heating system (34) and operable to transfer heat from the hot exhaust gas (32) to the feed water (36).

7. A combined cycle power plant heat recovery system (24) according to claim 6, the heat pipe (30) further comprising;
a conduit (44);
a solid or semisolid heat transfer medium disposed inside the conduit (44) on the walls thereof and operable to transfer heat from the first end (29) to the second end (31) thereof.

8. A combined cycle power plant heat recovery system (24) according to claim 6 or 7, the heat pipe (30) further comprising;
a conduit (44);
a working fluid disposed within the conduit (44);
the working fluid operable to transfer heat from the first end (29) to the second end (31) thereof.

9. A combined cycle power plant heat recovery system (24) according to any of claims 6 to 8, wherein cold side heat transfer from the heat pipe (30) to the feed water (36) is located outside of the hot exhaust gas duct (28).

10. A combined cycle power plant heat recovery system (24) according to any of claims 6 to 9, the second end (31) of the heat pipe (30) defining a cold side heat transfer surface (50).
